# EUROPÄISCHE PATENTSCHRIFT

(11) **EP 1 762 774 B1**
(45) Veröffentlichungstag und Bekanntmachung des Hinweises auf die Patenterteilung: **30.11.2011**
(21) Anmeldenummer: 05108236.0
(22) Anmeldetag: 08.09.2005
(51) Int. Cl.: F21S 8/10, B60Q 1/12, F21V 14/04, F21V 14/06, F21V 14/02

(54) **Scheinwerfer**
Headlamp
Projecteur

(43) Veröffentlichungstag der Anmeldung: 14.03.2007
(73) Patentinhaber: Hella KGaA Hueck & Co., 59552 Lippstadt (DE)
(72) Erfinder: Derckum, Jörg, 59590, Geseke (DE); Seiger, Ralf, 59556, Lippstadt (DE)

(56) Entgegenhaltungen:
- EP-A- 1 285 812
- EP-A- 1 450 099
- US-A1- 2004 090 788

## Beschreibung

Die Erfindung betrifft einen Scheinwerfer für ein Kraftfahrzeug mit einem Gehäuse, der im vorderen Bereich eine Abschlussscheibe aufweist, mit einem im Innern des Gehäuses angeordneten Projektionsmodul, das einen Reflektor, ein dem Reflektor zugeordnetes Leuchtmittel und eine im vom Reflektor reflektierten Lichtbündel angeordnete Linse aufweist, einer vertikalen Achse, um die das Projektionsmodul insbesondere für Kurvenlicht schwenkbar ist, und mit einer mit dem Projektionsmodul mitschwenkbaren Modulblende, die die Linse umgibt.

In der EP 1 450 099 A2 ist ein Scheinwerfer für Fahrzeuge beschrieben, der ein aus Kunststoff bestehendes Gehäuse aufweist, das auf der vorderen Seite eine lichtdurchlässige Abschlussscheibe umfasst. Im Inneren des Gehäuses ist ein Projektionsmodul angeordnet. Das Projektionsmodul besteht aus einem Reflektor, einem Leuchtmittel, einer Linse und einem Blendenteil, welches zur Erzeugung eines abgeblendeten Lichtbündels dient. Des Weiteren weist der Scheinwerfer eine vertikale Achse auf, um die das Projektionsmodul für Kurvenlicht schwenkbar ist. Die Linse des Projektionsmoduls ist von einer Blende umgeben, die mit ihrem inneren Rand an die vordere konvexe Seite der Linse angrenzt. Vor der Blende ist ein statischer Abdeckrahmen angeordnet, der die Sicht auf den rückwärtigen inneren Bereich des Gehäuses abdeckt. Es hat sich gezeigt, dass eine Platz sparende Anordnung des Scheinwerfers wünschenswert ist, insbesondere bei stark geneigten Abschlussscheiben.

Es ist die Aufgabe der vorliegenden Erfindung, einen Scheinwerfer bereit zu stellen, der eine geringe Bautiefe aufweist, ohne erheblichen Aufwand montiert werden kann, wobei die Anzahl der erforderlichen Bauteile möglichst gering gehalten werden kann.

Zur Lösung dieser Aufgabe wird ein Scheinwerfer mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Modulblende vor einem mit mindestens einem Lichtmodul ausgebildeten Tragrahmen angeordnet ist, um einen Einblick hinter den Tragrahmen in jeder Position des Projektionsmoduls weitestgehend zu verhindern. Der Tragrahmen kann benachbart zum Projektionsmodul Lichtmodule aufweisen, die mit Kammern ausgeführt sind und beispielsweise als Abbiegelicht und/oder Fernlicht wirken. Hierbei sind die Lichtmodule vorzugsweise als Reflektoren ausgeführt, wobei diese im Tragrahmen mit integriert sind. Damit möglichst in jeder horizontalen Schwenklage des Projektionsmoduls ein Einblick in das Innere des Scheinwerfers nicht entstehen kann, ist die Modulblende beabstandet vor dem Tragrahmen angeordnet. Zweckmäßigerweise befindet sich zwischen der Modulblende und dem Tragrahmen ein Ringspalt, so dass das Projektionsmodul zuverlässig in jede gewünschte Schwenklage gebracht werden kann, ohne dass die Modulblende die Tragrahmenoberfläche kontaktiert. Besonders vorteilhaft ist, dass durch die Positionierung der Modulblende vor dem Tragrahmen eine geringe Bautiefe des erfindungsgemäßen Scheinwerfers mit schwenkbarem Projektionsmodul erzielt werden kann, wobei gleichzeitig die mögliche Lichtleistung nicht beeinträchtigt wird. Ein weiterer Vorteil der Erfindung ist, dass durch den Tragrahmen mit seinen integrierten Lichtmodulen auf zusätzliche Träger- und/oder Rahmenkonstruktionen verzichtet werden kann. Im Vergleich zum Stand der Technik hat der erfindungsgemäße Scheinwerfer eine geringe Anzahl an erforderlichen Bauteilen, wodurch eine schnelle und wirtschaftliche Montage erreicht werden kann. Aufgrund der geringen Anzahl an Bauteilen weist der Scheinwerfer folglich eine geringe schwingende Masse auf, welches sich ebenfalls vorteilhaft auf die Gesamtkonstruktion auswirkt.

In einer bevorzugten Ausführungsform der Erfindung ist das Projektionsmodul an einem Schwenkrahmen befestigt, der an der der Modulblende abgewandten Seite des Tragrahmens angeordnet ist. Vorzugsweise ist die Baugruppe des Projektionsmoduls am Schwenkrahmen form- und/oder kraftschlüssig befestigt, wobei diese Verbindung vom Tragrahmen komplett verdeckt ist. In einer weiteren möglichen Ausgestaltung der Erfindung kann das Projektionsmodul an separaten Lagerstellen befestigt werden, die sich hinter dem Tragrahmen befinden.

Vorteilhafterweise weist der Tragrahmen eine Durchgangsöffnung auf, durch die das Lichtbündel in Richtung Linse geführt wird. Die Linse des Projektionsmoduls, das zweckmäßigerweise als Halogenprojektor zur Abblendlichterzeugung verwendet wird, ist durch die Modulblende umfasst. Die Modulblende ist vorzugsweise mit einer Öffnung ausgebildet, durch die zumindest teilweise die Linse in Richtung der Abschlussscheibe sich erstreckt. Hierbei ist die Linse in einer besonderen Ausführungsform der Erfindung an einem ringförmig ausgestalteten Halteelement (Linsenhalter) angeordnet. Damit ein entsprechender Schwenkbereich für die Linse des Projektionsmoduls erzielt werden kann, ist die Durchgangsöffnung des Tragrahmens im Hinblick auf ihre Größe entsprechend ausgebildet. In einer möglichen Ausführungsform des Scheinwerfers kann das Halteelement über Tragbeine oder Stege mit dem Reflektor des Projektionsmoduls, der hinter dem Tragrahmen sich befindet, verbunden sein.

Damit ein Einblick hinter den Tragrahmen nicht ermöglicht wird, ist es vorteilhaft, dass die Modulblende zumindest teilweise an ihrem freien Ende den Tragrahmen überdeckt. Um eine zuverlässige Schwenkbewegung des Projektionsmoduls zu gewährleisten, ist der Ringspalt vorzugsweise geringer als 10 mm, besonders bevorzugt geringer als 3 mm. Zur Erzeugung der genannten Schwenkbewegung ist eine mechanische, hydraulische, pneumatische oder elektrische servomotorische Antriebseinheit denkbar, die mit dem Projektionsmodul in Wirkverbindung steht. Der jeweilige Schwenkwinkel kann in Abhängigkeit von der Fahrtrichtung, der Lenkradstellung, der Fahrgeschwindigkeit oder sogar des antizipierten Kurvenradius (z.B. über gekoppeltes Navigationssystem) definiert werden.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine Teilansicht eines Horizontalschnitts auf ein schwenkbares Projektionsmodul eines Kraftfahrzeugscheinwerfers und
- Figur 2: ein horizontaler Gesamtschnitt des in Figur 1 dargestellten Kraftfahrzeugscheinwerfers mit einem ersten und einem zweiten Lichtmodul, die benachbart zum Projektionsmodul angeordnet sind.

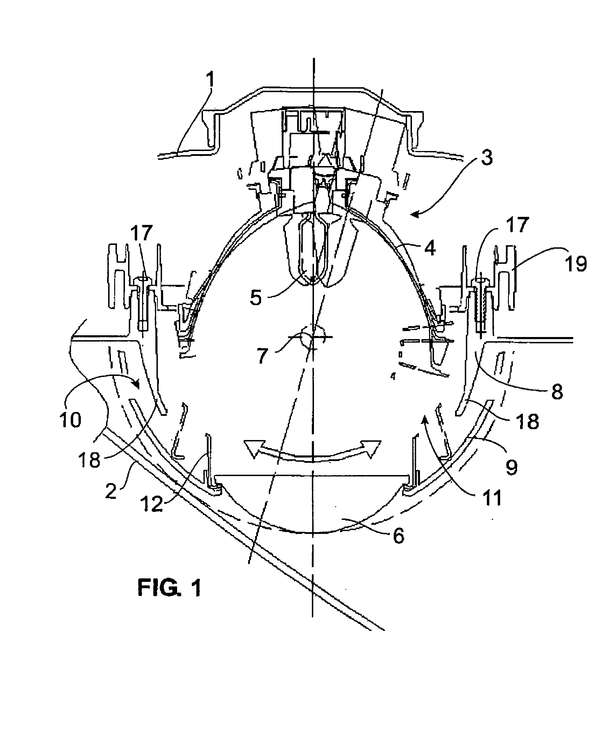

In Figur 1 ist ein Ausschnitt eines Kraftfahrzeugscheinwerfers gezeigt, der ein Projektionsmodul 3 aufweist, das einen elliptischen Reflektor 4, ein dem Reflektor 4 zugeordnetes Leuchtmittel 5 und eine im vom Reflektor 4 reflektierten Lichtbündel angeordnete Linse 6 aufweist. Die Linse 6, die beispielsweise aus Glas oder aus einem Kunststoff bestehen kann, wird durch einen Linsenhalter 12 an ihrem Randbereich klemmend gehalten. Hierbei ist der Linsenhalter 12 ringförmig ausgestaltet, so dass die Linse 6 an ihrem freien Ende umfassend gehalten wird.

Das Projektionsmodul 3 weist eine vertikale Achse 7 auf, um die das Projektionsmodul 3 für Kurvenlicht schwenkbar ist. Um mit dem Projektionsmodul 3 dynamisches Kurvenlicht zu erzeugen, ist dieses mit einer Steuereinrichtung (nicht dargestellt) verbunden, die das Projektionsmodul 3 in Abhängigkeit des Kurvenradius in einen vorbestimmten Winkelbereich um die vertikale Achse 7 schwenkt. Die vertikale Achse 7 ist hierbei in der Nähe des vorderen Randes des Reflektors 4 angeordnet. Im vorderen Bereich des Scheinwerfers ist eine Abschlussscheibe 2 angeordnet, durch die das im Scheinwerfer erzeugte Lichtbündel nach außen strahlt. Der Scheinwerfer weist in seinem hinteren Bereich ein aus Kunststoff bestehendes Gehäuse 1 auf, an dem die einzelnen Scheinwerferkomponenten gehalten werden. Das Gehäuse 1 ist an seiner Rückseite am Kraftfahrzeug befestigbar. Ein dynamisches Kurvenlicht kann in einer möglichen Ausgestaltung der Erfindung ebenfalls dadurch erreicht werden, dass lediglich der Reflektor 4 verschwenkt wird. Auch auf diese nicht explizit dargestellte Ausführung lässt sich diese Erfindung beziehen.

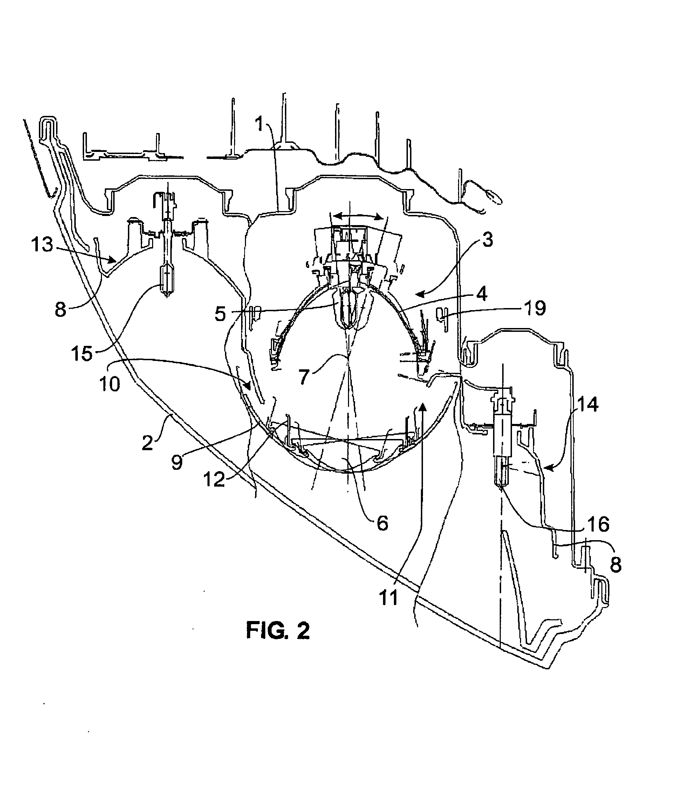

Der Scheinwerfer umfasst des Weiteren einen Tragrahmen 8, der gemäß Figur 2 zwei mit Kammern ausgebildete Lichtmodule 13, 14 aufweist. Das Lichtmodul 13 dient hierbei als Fernlicht und das Lichtmodul 14 als statisches Abbiegelicht. Beide Lichtmodule 13, 14 weisen entsprechende Reflektorflächen auf, die im Tragrahmen 8, welches ein Spritzgussteil aus Kunststoff ist, integriert sind. Das Fernlichtmodul 13 sowie das Abbiegelichtmodul 14 weisen zudem Öffnungen auf, durch die jeweils eine Lichtquelle 15, 16 hindurchragt. Der Scheinwerfer kann derart ausgeführt sein, dass das Abbiegelichtmodul 14 bei engen Kurvenfahrten dem dynamischen Kurvenlicht zuschaltbar ist.

Vor dem Tragrahmen 8 ist eine Modulblende 9 angeordnet, die durch einen gewölbten Mantelflächenabschnitt gebildet ist. Der Mantelflächenabschnitt kann beispielsweise durch eine Kugelteilfläche oder durch eine Zylinderteilfläche gebildet sein. Die Modulblende 9 umgibt hierbei die Linse 6, wobei der Linsenhalter 12 klemmend an der Rückseite der Modulblende 9 gehalten ist. Der in Figur 1 dargestellte Doppelpfeil deutet den möglichen Schwenkbereich um die vertikale Achse 7 des Projektionsmoduls 3 an, wobei während der horizontalen Bewegung des Projektionsmoduls 3 die Modulblende 9 mit der Linse 6 sowie mit dem Linsenhalter 12 mitgeschwenkt wird. In der hier dargestellten Ausführungsform des erfindungsgemäßen Scheinwerfers ist der Linsenhalter 12 über nicht dargestellte metallische oder aus Kunststoff bestehende Stege mit dem hinter dem Tragrahmen 8 angeordneten Reflektor 4 verbunden. Das Projektionsmodul 3 ist an der Rückseite des Tragrahmens 8 durch Schraubverbindungen 17 mit einem rahmenartigen Schwenkmodul 19 zuverlässig befestigt. Wie aus der Figur 1 zu erkennen ist, ist das Projektionsmodul 3 über das Schwenkmodul 19 mittelbar mit dem Tragrahmen 8 befestigt ist. Durch die Anordnung der Modulblende 9 vor dem Tragrahmen 8, wie die Figuren 1 und 2 deutlich zeigen, kann der benötigte Bauraum des Scheinwerfers in Fahrtrichtung wirkungsvoll minimiert werden.

Die vor dem Tragrahmen 8 mitschwenkbare Modulblende 9 verhindert in jeder möglichen Position des Projektionsmoduls 3 einen Einblick in das Innere des Kraftfahrzeugscheinwerfers. Dabei ist die Modulblende 9 zum Tragrahmen 8 beabstandet, das bedeutet, dass zwischen der Modulblende 9 und dem Tragrahmen 8 ein Spalt 10 vorhanden ist. Der Tragrahmen 8 weist des Weiteren eine Durchgangsöffnung 11 auf, durch die das Lichtbündel in Richtung Linse 6 strahlt. Die Durchgangsöffnung 11 ist entsprechend ihrem Durchmesser ausgebildet, damit das Projektionsmodul 3 entsprechend den Erfordernissen verschwenkt werden kann. Der Schwenkwinkel des Projektionsmoduls 3 beträgt vorzugsweise ± 15°, das heißt, dass das Projektionsmodul 3 aus seiner Normallage heraus nach beiden Seiten jeweils um einen Winkel von maximal 15° schwenkbar ist. Selbstverständlich sind in einer weiteren Ausführungsform der Erfindung größere oder kleinere Schwenkwinkel ebenfalls realisierbar.

Wie Figur 1 und Figur 2 verdeutlichen, überdeckt die Modulblende 9 mit ihrem freien Ende zumindest teilweise den Tragrahmen 8. In diesem Überdeckungsbereich ist der Tragrahmen 8 mit einem gewölbten Abschirmungsbereich 18 ausgebildet, der sich unterhalb der Modulblende 9 in Richtung der Linse 6 erstreckt. Der Tragrahmen 8 ist an einer Aufhängung mit zwei Lagerpunkten oberhalb des Projektionsmoduls 3 und einem Lagerpunkt unterhalb des Projektionsmoduls 3 befestigt gelagert, wodurch der Tragrahmen 8 um eine horizontale und eine vertikale Achse verschwenkt werden kann, welches explizit nicht dargestellt ist. Der beweglich ausgeführte Tragrahmen 8 wird unter anderem zur Justage der erzeugten Lichtverteilung des Scheinwerfers verwendet. Die Bewegung des Tragrahmens 8 kann ebenfalls zur automatischen Leuchtweitenkorrektur erfolgen, wobei die Bewegung des Tragrahmens 8 über Stellmotoren bewirkt werden kann.

Es hat sich gezeigt, dass auf der Vorderseite des Tragrahmens 8 im Bereich der Schraubenbefestigung 17 Einfallstellen bei der Kunststoffverdickung entstehen können, die ebenfalls durch die Modulblende 9 zuverlässig abgedeckt werden.

### Bezugszeichenliste

- **1**: Gehäuse
- **2**: Abschlussscheibe
- **3**: Projektionsmodul
- **4**: Reflektor
- **5**: Leuchtmittel
- **6**: Linse
- **7**: Vertikale Achse
- **8**: Tragrahmen
- **9**: Modulblende
- **10**: Ringspalt
- **11**: Durchgangsöffnung
- **12**: Halteelement, Linsenhalter
- **13**: Erstes Lichtmodul, Lichtkammer, Fernlicht
- **14**: Zweites Lichtmodul, Lichtkammer, Abbiegelicht
- **15**: Lichtquelle
- **16**: Lichtquelle
- **17**: Schraubverbindung
- **18**: Abschirmbereich
- **19**: Schwenkmodul

## Patentansprüche

1. Scheinwerfer für ein Kraftfahrzeug mit einem Gehäuse (1), der im vorderen Bereich eine Abschlussscheibe (2) aufweist, mit
einem im Innem des Gehäuses (1) angeordneten Projektionsmodul (3), das einen Reflektor (4), ein dem Reflektor (4) zugeordnetes Leuchtmittel (5) und eine im vom Reflektor (4) reflektierten Lichtbündel angeordnete Linse (6) aufweist,
einer vertikalen Achse (7), um die das Projektionsmodul (3) insbesondere für Kurvenlicht schwenkbar ist, und
mit einer mit dem Projektionsmodul (3) mitschwenkbaren Modulblende (9), die die Linse (6) umgibt,
**dadurch gekennzeichnet,**
**dass** die Modulblende (9) vor einem mit mindestens einem Lichtmodul (13,14) ausgebildeten Tragrahmen (8) angeordnet ist, um einen Einblick hinter den Tragrahmen (8) in jeder Position des Projektionsmoduls (3) weitestgehend zu verhindern.

2. Scheinwerfer nach Anspruch 1,
**dadurch gekennzeichnet,**
**dass** das Projektionsmodul (3) an der der Modulblende (9) abgewandten Seite des Tragrahmens (8) befestigt ist.

3. Scheinwerfer nach Anspruch 1 oder 2,
**dadurch gekennzeichnet,**
**dass** zwischen der Modulblende (9) und dem Tragrahmen (8) ein Ringspalt (10) vorhanden ist.

4. Scheinwerfer nach einem der vorhergehenden Ansprüche,
**dadurch gekennzeichnet,**
**dass** der Ringspalt (10) geringer ist als 10 mm, vorzugsweise geringer ist als 3 mm.

5. Scheinwerfer nach einem der vorhergehenden Ansprüche,
**dadurch gekennzeichnet,**
**dass** das Projektionsmodul (3) form- und/oder kraftschlüssig an einem hinter dem Tragrahmen (8) angeordneten Schwenkmodul (19) befestigt ist.

6. Scheinwerfer nach einem der vorhergehenden Ansprüche,
**dadurch gekennzeichnet,**
**dass** der Tragrahmen (8) eine Durchgangsöffnung (11) aufweist, durch die das Lichtbündel in Richtung Linse (6) geführt wird.

7. Scheinwerfer nach Anspruch 6,
**dadurch gekennzeichnet,**
**dass** die Linse (6) an einem ringförmig ausgestalteten Halteelement (12) angeordnet ist.

8. Scheinwerfer nach Anspruch 7,
**dadurch gekennzeichnet,**
**dass** der Reflektor (4) über Stege mit dem Halteelement (12) verbunden ist, die durch die Durchgangsöffnung (11) sich erstrecken.

9. Scheinwerfer nach einem der vorhergehenden Ansprüche,
**dadurch gekennzeichnet,**
**dass** die Modulblende (9) zumindest teilweise den Tragrahmen (8) überdeckt.

10. Scheinwerfer nach einem der vorhergehenden Ansprüche,
**dadurch gekennzeichnet,**
**dass** das Projektionsmodul (3) zwischen einem ersten Lichtmodul (13) und einem zweiten Lichtmodul (14) angeordnet ist.

11. Scheinwerfer nach einem der vorhergehenden Ansprüche,
**dadurch gekennzeichnet,**
**dass** der Tragrahmen (8) einen gewölbten Abschirmungsbereich (18) aufweist, der sich unterhalb der Modulblende (9) in Richtung der Linse (6) erstreckt.

12. Scheinwerfer nach einem der vorhergehenden Ansprüche,
**dadurch gekennzeichnet,**
**dass** die Modulblende (9) durch einen gewölbten Mantelflächenabschnitt gebildet ist.

## Claims

1. Headlight for a motor vehicle with housing (1) with cover lens (2) in its front area, containing a projection module (3) - located in the housing (1) interior - consisting of a reflector (4), a light source (5) assigned to the reflector (4) and a lens (6) located within a light beam reflected by the reflector (4), a vertical axis (7), around which the projection module (3) shall be swivable, especially for curve light, and a module panel (9) which shall be swivable together with the projection module (3) and surrounding the lens (6),
**characterized in**
**that** the module panel (9) shall be located in front of a supporting frame (8) equipped with at least one light module (13,14) in order to prevent visibility of the area behind the supporting frame (8) in all positions of the projection module (3) to the greatest possible extent.

2. Headlight according to Claim 1,
**characterized in**
**that** the projection module (3) shall be fixated on the side of support frame (8) facing away from the module panel (9).

3. Headlight according to Claims 1 or 2,
**characterized in**
**that** a ring gap (10) shall exist between module panel (9) and support frame (8).

4. Headlight according to one of the Claims listed above,
**characterized in**
**that** the ring gap (10) shall be less than 10 mm, preferably less than 3 mm wide.

5. Headlight according to one of the Claims listed above,
**characterized in**
**that** the projection module (3) shall be attached by interlocking and/or force-fit connection to a swivel module (19) located behind the support frame (8).

6. Headlight according to one of the Claims listed above,
**characterized in**
**that** the support frame (8) shall have a passage opening (11) through which the light beam shall be guided in the direction of the lens (6).

7. Headlight according to Claim 6,
**characterized in**
**that** the lens (6) shall be located on a ring-shaped retaining element (12).

8. Headlight according to Claim 7,
**characterized in**
**that** the reflector (4) shall be connected to the retaining element (12) by struts extending through the passage opening (11).

9. Headlight according to one of the Claims listed above,
**characterized in**
**that** the module panel (9) shall at least partially mask the support frame (8).

10. Headlight according to one of the Claims listed
above,**characterized in**
**that** the projection module (3) shall be located between the first light module (13) and a second light module (14).

11. Headlight according to one of the Claims listed above,
**characterized in**
**that** the support frame (8) shall have a curved shielding section (18) extending below the module panel (9) in the direction of the lens (6).

12. Headlight according to one of the Claims listed above,
**characterized in**
**that** the module panel (9) shall be formed by at curved girthed surface section.

## Revendications

1. Projecteur pour un véhicule automobile avec un boîtier (1) qui présente une glace extérieure (2) dans la zone avant, avec un module à projection (3) disposé à l'intérieur du boîtier (1) qui présente un réflecteur (4), un moyen d'éclairage (5) affecté au réflecteur (4) et une lentille (6) disposée dans le faisceau lumineux reflété par le réflecteur (4),
un axe vertical (7) autour lequel le module à projection (3) surtout pour l'éclairage de virage est pivotant et
avec un masque de module (9) également pivotant avec le module à projection (3) qui entoure la lentille (6),
**caractérisé en ce que**
le masque de module (9) est disposé devant un cadre porteur (8) réalisé avec au moins un module d'éclairage (13, 14) pour empêcher au maximum la vue derrière le cadre porteur (8) dans chaque position du module à projection (3).

2. Projecteur selon la revendication 1,
**caractérisé en ce que**
le module à projection (3) est monté au cadre porteur (8) sur le côté détourné du masque de module (9).

3. Projecteur selon la revendication 1 ou 2,
**caractérisé en ce qu'**
une fente annulaire (10) se trouve entre le masque de module (9) et le cadre porteur (8).

4. Projecteur selon l'une des revendications précédentes,
**caractérisé en ce que**
la fente annulaire (10) est inférieure à 10 mm, de préférence inférieure à 3 mm.

5. Projecteur selon l'une des revendications précédentes,
**caractérisé en ce que**
le module à projection (3) est monté solidaire et/ou par adhérence à un module pivotant (19) disposé derrière le cadre porteur (8).

6. Projecteur selon l'une des revendications précédentes,
**caractérisé en ce que**
le cadre porteur (8) présente une ouverture (11) à travers laquelle le faisceau lumineux sera guidé dans la direction de la lentille (6).

7. Projecteur selon la revendication 6,
**caractérisé en ce que**
la lentille (6) est disposée sur un élément de maintien (12) réalisé de façon annulaire.

8. Projecteur selon la revendication 7,
**caractérisé en ce que**
le réflecteur (4) est relié avec l'élément de maintien (12) par des traverses qui s'étendent à travers l'ouverture (11).

9. Projecteur selon l'une des revendications précédentes,
**caractérisé en ce que**
le masque de module (9) couvre au moins partiellement le cadre porteur (8).

10. Projecteur selon l'une des revendications précédentes,
**caractérisé en ce que**
le module à projection (3) est disposé entre un premier module d'éclairage (13) et un deuxième module d'éclairage (14).

11. Projecteur selon l'une des revendications précédentes,
**caractérisé en ce que**
le cadre porteur (8) présente une zone de blindage bombée (18) qui s'étend au-dessous du masque de module (9) en direction de la lentille (6).

12. Projecteur selon l'une des revendications précédentes,
**caractérisé en ce que**
le masque de module (9) est formé par un tronçon de surface enveloppe bombé.
